# EUROPÄISCHE PATENTSCHRIFT

(11) **EP 0 311 751 B1**
(45) Veröffentlichungstag und Bekanntmachung des Hinweises auf die Patenterteilung: **31.03.1993**
(21) Anmeldenummer: 88110634.8
(22) Anmeldetag: 04.07.1988
(51) Int. Cl.: H01B 9/00, H01B 7/04

(54) **Flexible Starkstromleitung, insbesondere Leitungstrosse, mit integrierten Lichtwellenleitern**
Flexible power line, particularly heavy-duty cable with integrated lightwave conductors.
Ligne courant fort flexible, en particulier câble pour sevices durs avec des conducteurs d'ondes de lumière intégrés.

(30) Priorität: 15.10.1987 DE 8713863 U
(43) Veröffentlichungstag der Anmeldung: 19.04.1989
(73) Patentinhaber: Felten & Guilleaume Energietechnik AG, D-51058 Köln (DE)
(72) Erfinder: Harjes, Bernd, Dr.-Ing., D-5060 Bergisch Gladbach 2 (DE); Heinen, Karl-Hans, Dipl.-Ing., D-5000 Köln 71 (DE); Dinzen, Helmut, Dipl.-Ing., D-5000 Köln 60 (DE)

(56) Entgegenhaltungen:
- DE-A- 2 801 231
- DE-A- 3 224 597
- ELEKTROTECHNISCHE ZEITSCHRIFT E.T.Z. vol. 108, no. 5, März 1987, Berlin (DE) Seiten 178 - 183; B. HARJES: "Lichtwellenleiter in Hochspannungsleitungstrossen"

## Beschreibung

Die Erfindung betrifft eine mehradrige flexible Starkstromleitung, insbesondere eine Leitungstrosse, mit integrierten Lichtwellenleitern (LWL) nach dem Oberbegriff des Anspruchs 1. Leitungstrossen für Nennspannungen bis 60 kV finden Verwendung für den Anschluß von ortsveränderlichen Großgeräten, wie Bagger und Absetzer in Tagebauen und an Kohlebunkern, von Verladebrücken und Portalkränen sowie zur Verlegung an Bandstraßen bei sehr hohen mechanischen Beanspruchungen. Die Integration von LWL in die Starkstromleitung ermöglicht die Kombination von Energie- und Datenübertragung mit den bekannten Vorteilen der LWL-Übertragungssysteme: Freiheit von elektromagnetischen Störeinflüssen, elektrische Potentialtrennung und sehr hohe Imformationsbreite.

Flexible Starkstromleitungen, bei denen in einem der äußeren Zwickel der Energieadern eine LWL-Leitung angeordnet ist, sind bekannt. So ist in der DE-A-33 35 325 eine flexible Starkstromleitung mit drei um einen Profilkern verseilten Energieadern angegeben, bei der in zwei der äußeren Zwickelräume der Energieadern der halbierte Schutzleiter (je eine Teil-Schutzleiterader) und im dritten Zwickelraum ein Verseilelement mit LWL angeordnet sind.

Dabei sind die kunststoff-beschichteten LWL verseilt oder lose gebündelt in einem Schlauch aus einem Elastomer (dem LWL-Leitungsmantel) angeordnet, wozu in der DE-A-28 01 231 angegeben ist, daß dieser Schlauch Vorzugsweise aus einem fluorierten Ethylen-Propylen-Copolymer besteht. Dies gehört zur Gruppe der fluorhaltigen Thermoplaste, von denen FEP (Tetrafluorethylen-Hexafluorpropylen-Copolymerisat) und PFA (Perfluoralkoxy-Copolymer) unter den Handelsnamen wie Teflon (FEP und PFA) und Hostaflon (PFA) die verbreitetsten sind.

Als weitere LWL-Leitungsmantelwerkstoffe werden vorwiegend Polyurethan-Elastomere (PUR) und vernetzbare Polymere wie Silikongummi und EPR (Ethylen-Propylen-Rubber) eingesetzt.

Die DE-A-32 24 597 zeigt eine Starkstromleitung mit elektrischen und optischen Adern, wobei die optischen Adern mit einer äußern Bespinnung oder einem Geflecht aus Stahl- oder Kunstofflitzen versehen sind.

Bei diesen flexiblen Starkstromleitungen ist um die Verseilelemente (die Energieadern, Teil-Schutzleiteradern, LWL-Leitung und Zwickelfüllungen) ein Innenmantel, und darüber ein Außenmantel extrudiert.

Einzelheiten zu den Leitungstrossen ohne integrierte LWL-Leitung sind dem Prospekt "Isolierte Leitungen" der Felten & Guilleaume Energietechnik GmbH (heute AG) 2.82, S. 14 zu entnehmen. Hier ist u. a. eine Leitungstrosse mit drei Energieadern und einem aufgeteilten Schutzleiter gezeigt, wobei in den drei äußeren Aderzwickeln je eine Teilschutzleiterader angeordnet ist. Der um die Verseilelemente extrudierte Innenmantel besteht aus einer Gummi-Mischung auf Styrol-Butadien-Kautschuk-Basis, der Außenmantel aus einer Polychloropren-Mischung. Beide Mäntel müssen nach der Extrusion bei Temperaturen von 180 bis 200 °C vernetzt (vulkanisiert) werden.

Will man nun in eine solche Leitungstrosse anstelle einer Teilschutzleiterader eine der vorerwähnten LWL-Leitungen einbauen, so besteht die Gefahr, daß die bei der Extrusion und Vernetzung von Innen- und Außenmantel auftretenden hohen Drücke und Temperaturen die LWL beschädigen.

Daher liegt der Erfindung die Aufgabe zugrunde, die LWL-Leitung in die Leitungstrosse dergestalt einzubauen, daß die LWL gegen jene hohen Drücke und Temperaturen geschützt sind.

Diese Aufgabe wird bei einer gattungsgemäßen Starkstromleitung durch die kennzeichnenden Merkmale des Anspruchs 1 gelöst. Dies besteht im wesentlichen darin, daß über dem Schlauch (Mantel) der LWL-Leitung eine wärmedämmende Umhüllung aus mehreren Lagen von übereinander liegenden Gewebebändern und/oder Vliesen angeordnet ist (Temperaturschutz), und daß der die LWL-Leitung aufnehmende Aderzwickel zu über 50 % des Zwickelvolumens mit Trensen aus Jutefäden oder einem ähnlichen Material ausgefüllt ist (Druckschutz). Dabei bestehen die Gewebebänder und Vliese aus einem bis mindestens 200 °C wärmebeständigen Werkstoff von geringer Wärmeleitfähigkeit, wie Textilglas, Polyacrylate, Polyester oder Aramide, und für die Trensen können auch Baumwoll-, Reyon-, Polyester- oder Glasfäden eingesetzt werden.

Die Unteransprüche betreffen Ausgestaltungen der Wärmedämmung und der Zwickelfüllung.

Der mit der Erfindung erzielte Vorteil besteht darin, daß es mit der Kombination einfacher konstruktiver Maßnahmen gelingt, die bei der Herstellung einer flexiblen Starkstromleitung mit einer integrierten LWL-Leitung bei der Extrusion und Vernetzung von Innen-und Außenmantel auftretenden Schwierigkeiten zu beheben. Weiter wirkt der Schutz der LWL-Leitung auch bei den sehr hohen mechanischen Beanspruchungen, denen die Leitungstrossen für den Anschluß von ortsveränderlichen Großgeräten, wie Baggern und Absetzern in Tagebauen, im Betrieb unterliegen.

Zwei Ausführungsbeispiele der Erfindung sind in der Zeichnung dargestellt und werden im folgenden näher beschrieben. Es zeigen im Querschnitt
- Fig. 1 eine Leitungstrosse mit drei Energieadern und in deren Zwickel zwei Teil-Schutzleiteradern sowie eine LWL-Leitung mit mehreren lose gebündelten LWL, Wärmedämmung und Zwickelfüllung, und
- Fig. 2 eine in die gleiche Leitungstrosse einsetzbare andere LWL-Leitung: mit 6 verseilten LWL, Wärmedämmung und darum aufgebrachter dritter Teil-Schutzleiterader.

Bezeichnet sind mit
- 1: Energieader
- 11: Energieleiter, feindrähtig, aus verzinnten Cu-Drähten
- 12: Leitschichten, innere bzw. äußere, leitende Gummischichten, zur Leiterglättung bzw. Feldbegrenzung, bilden zusammen mit der Isolierung ein hohlraumfreies elektrisches Radialfeld
- 13: Isolierhülle aus einer wärmefesten Gummi-Mischung auf EPR-Basis
- 2: Innenmantel aus einer Gummi-Mischung auf Styrol-Butadien-Kautschuk-Basis
- 3: Außenmantel aus einer Polychloropren-Mischung
- 4: Teil-Schutzleiterader
- 41: Schutzleiter, aufgeteilt, aus feindrähtigem Cu
- 42: Umhüllung aus Leitgummi
- 51: Zwickelfüllung eines LWL-freien Energieaderzwickels, Trensen aus Jutefäden
- 52: Zwickelfüllung des die LWL-Leitung aufnehmenden Aderzwickels
- 6: LWL-Leitung
- 60: Kernstrang aus zugfestem Kunststoff
- 61: Lichtwellenleiter (LWL), kunststoff-beschichtet
- 62: Schlauch (Mantel) aus einem Elastomer
- 63: Gittergewebe aus wärmedämmendem Werkstoff, darunter Metallfolie
- 64: Wärmedämmende Umhüllung aus Gewebebändern und/oder Vliesen
- 7: Teil-Schutzleiter mit integrierter LWL-Leitung.

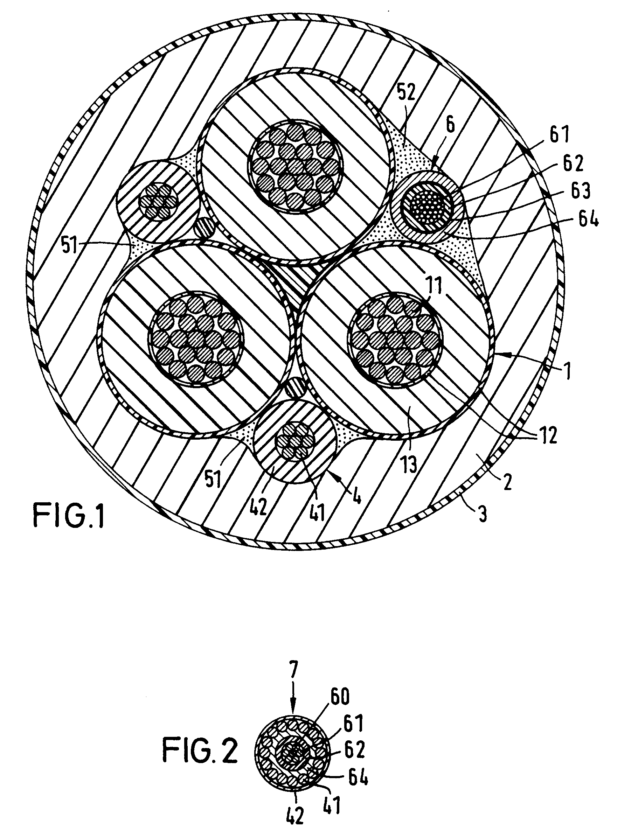

Aus der Fig. 1 sind zunächst die üblichen Teile einer Leitungstrosse ersichtlich: die drei Energieadern 1, die Teil-Schutzleiteradern 4, der Innenmantel 2 und der Außenmantel 3. Innen- und Außenmantel bestehen aus Gummi-Mischungen, die um die Verseilelemente der Leitungstrosse extrudiert und anschließend vulkanisiert werden. Einzelheiten hierzu sind oben angegeben.

Was nun die Erfindung betrifft, so ist in einem der äußeren Zwickel der Energieadern 1 die LWL-Leitung 6 angeordnet, d. h. sie ist anstelle der dritten Teil-Schutzleiterader in die Leitungstrosse eingeseilt. Diese Leitung besteht aus einer Anzahl von kunststoffbeschichteten, lose gebündelten LWL 61, die von dem Schlauch 62 (dem LWL-Leitungsmantel) umgeben sind, der aus einem Elastomer besteht, das der Gruppe der Polyurethane, fluoridhaltigen Thermoplaste, Silikongummi oder Copolymere wie EPR angehört.

Über dem Schlauch 62 ist die wärmedämmende Umhüllung 64 aus mehreren Lagen von übereinander liegenden Gewebebändern und/oder Vliesen (Faserflorbändern) angeordnet, die aus einem bis mindestens 200 °C wärmebeständigen Werkstoff von geringer Wärmeleitfähigkeit bestehen. Dazu werden eingesetzt: Textilglas, Polyacrylate, Polyester oder Aramide (Handelsname Kevlar).

Während diese Umhüllung zum Temperaturschutz der LWL dient, ist zum Druckschutz der die LWL-Leitung 6 aufnehmende Aderzwickel zu etwa 70 % des Zwickelvolumens mit Trensen (dünnen Schnüren) 52 aus Jutefäden (Bastfäden) ausgefüllt. Die LWL-freien Aderzwickel sind dies nur zu etwa 30 %. Die Trensen der Zwickelfüllung können auch aus Baumwoll-, Reyon-, Polyester- oder Glasfäden bestehen. Reyon ist der Gattungsname für Filamentgarne aus Viskose (Natrium-Cellulose-Xanthogenat).

Die Wirkung der wärmedämmenden Umhüllung 64 wird verstärkt, wenn unter oder in ihr ein Gittergewebe aus dem gleichen Werkstoff und darunter eine Metallfolie, beide mit 63 bezeichnet, angeordnet sind. Die letztere bewirkt eine gleichmäßigere Wärmeverteilung und eine Wärmereflexion.

In der Fig. 2 ist eine in die gleiche Leitungstrosse einsetzbare, andere LWL-Leitung gezeigt, die in den dritten Teil-Schutzleiter integriert ist. Bei ihr sind um den Kernstrang 60 aus zugfestem Kunststoff sechs kunststoff-beschichtete LWL 61 geseilt und von dem Schlauch (Mantel) 62 umgeben. Darüber liegt die oben beschriebene wärmedämmende Umhüllung 64. Um diese LWL-Leitung ist der Teil-Schutzleiter 41 geseilt und von der Hülle 42 aus Leitgummi umgeben.

## Patentansprüche

1. Mehradrige flexible Starkstromleitung, insbesondere Leitungstrosse, mit integrierten Lichtwellenleitern (LWL), die als LWL-Leitung (6) in einem der äüßeren Zwickel der Energieadern (1) angeordnet sind,
- wobei die kunststoff-beschichteten LWL (61) verseilt oder lose gebündelt in einem Schlauch (62) aus einem Elastomer, das der Gruppe der Polyurethane, fluorhaltigen Thermoplaste, Silikongummi oder Copolymere wie Ethylen-Propylen-Rubber angehört, angeordnet sind,
- und um die Verseilelemente der Leitung ein Innenmantel (2) aus einer Gummi-Mischung auf der Basis Natur- oder Synthesekautschuk wie Styrol-Butadien-Kautschuk, und darüber ein Außenmantel (3) aus einer Polychloropren-Mischung angeordnet ist,
**dadurch gekennzeichnet,**
- daß über dem Schlauch (62) eine wärmedämmende Umhüllung (64) aus mehreren Lagen von übereinander liegenden Gewebebändern und/oder Vliesen aus einem bis mindestens 200 °C wärmebeständigen Werkstoff von geringer Wärmeleitfähigkeit angeordnet ist, wobei als Werkstoffe Textilglas, Polyacrylate, Polyester oder Aramide eingesetzt werden,
- und daß der die LWL-Leitung (6) aufnehmende Aderzwickel zu über 50 % des Zwickelvolumens mit Trensen (52) aus Fäden aus Jute, Baumwolle, Reyon, Polyester oder Glas ausgefüllt ist.

2. Starkstromleitung nach Anspruch 1, **dadurch gekennzeichnet,** daß unter oder in der wärmedämmenden Umhüllung (64) ein Gittergewebe aus dem gleichen Werkstoff und darunter eine Metallfolie (63) angeordnet sind (Fig. 1).

3. Starkstromleitung nach Anspruch 1 oder 2, **dadurch gekennzeichnet,** daß über der wärmedämmenden Umhüllung (64) der LWL-Leitung ein Teil-Schutzleiter (41) aufgeseilt und mit einer Gummi-Mischung (42) umhüllt ist (Fig. 2).

4. Starkstromleitung nach einem der Ansprüche 1 bis 3, **dadurch gekennzeichnet,**
- daß der Durchmesser der LWL-Leitung (6) oder der die LWL-Leitung umfassenden Teilschutzleiterader (7) etwa gleich dem Durchmesser der beiden anderen Teilschutzleiteradern (4) ist, und
- die LWL-freien Energieaderzwickel zu etwa 30 %, der die LWL-Leitung aufnehmende Zwickel jedoch zu etwa 70 % des Zwickelvolumens mit Trensen ausgefüllt sind/ist (51 bzw. 52).

## Claims

1. A multi-core flexible high-power transmission line, more particularly a heavy-duty cable, with integrated optical waveguides, which are arranged as an optical waveguide line (6) in one of the outer wedges of the energy cores (1),
- the plastics material-coated optical waveguides (61) being stranded or loosely bundled in a tube (62) made of an elastomer belonging to the group of polyurethanes, fluorine-containing thermoplastics, silicone rubber or copolymers such as ethylene-propylene rubber,
- and an inner casing (2) made of a rubber mixture with a base of natural or synthetic rubber such as styrene-butadiene-rubber being arranged around the cable elements of the line, and an outer casing (3) made of a polychloroprene mixture being arranged over said inner casing,
characterised in that
- arranged over the tube (62) is a heat-insulating covering (64) made of a plurality of layers of superimposed woven strips or fleece made of a material heat resistant to at least 200°C and of low thermal conductivity, textile glass, polyacrylates, polyesters or aramides being used as such materials,
- and the core wedge accommodating the optical waveguide line (6) is filled to over 50%, of the wedge volume with worming (52) made of threads of jute, cotton, rayon, polyester or glass.

2. A high-power transmission line according to claim 1, characterised in that arranged beneath or in the heat-insulating covering (64) is a woven mesh made of the same material and a metal foil (63) is arranged beneath the woven mesh (Fig. 1).

3. A high-power transmission line according to claim 1 or 2, characterised in that a partial protective conductor (41) is stranded over the heat-insulating covering (64) of the optical waveguide line and is enclosed by a rubber mixture (42) (Fig. 2).

4. A high-power transmission line according to one of claims 1 to 3, characterised in that
- the diameter of the optical waveguide line (6) or the partial protective conductor core (7) enclosing the optical waveguide line is approximately equal to the diameter of the two other partial protective conductor cores (4), and
- the optical waveguide-free energy core wedge is filled to approximately 30%, but the optical waveguide line-accommodating wedge to approximately 70% of the wedge volume with worming (51, 52).

## Revendications

1. Conducteur flexible à plusieurs éléments câblés, pour courant fort, en particulier câble pour des services durs comprenant des guides à ondes lumineuses intégrés (LWL) sous la forme d'un conducteur (LWL) (6) placé dans un des bourrages extérieurs formés entre les câbles d'énergie (1) et dans lequel :
- les guides à ondes lumineuses LWL (61) revêtus de matière synthétique sont câblés ou déposés en faisceau lâche à l'intérieur d'une gaine (62) fait d'un élastomère appartenant au groupe des polyuréthane, des thermoplastiques fluorés, du caoutchouc de silicone ou des copolymères tels que le caoutchouc d'éthylène-propylène.
- les éléments câblés du conducteur sont enveloppés par une enveloppe interne (2) fait d'un mélange caoutchouté à base de caoutchouc naturel ou de synthèse, tel que le caoutchouc de styrène butadiène, et recouvert lui-même par une enveloppe externe (3) fait d'un mélange de polychloroprène.
Le conducteur est caractérisé en ce que :
- la gaine (62) est entouré par une enveloppe (64) calorifuge constitué par plusieurs couches superposées de bandes de tissu et/ou nappes textiles faites d'une manière résistant à une température d'au moins 200°C et possédant une faible conductibilité thermique , telle que le verre textile, le polyacrylate, le polyester ou l'aramide.
- le bourrage des câbles recevant le conducteur (6) est rempli à plus de 50 % de son volume, par de la filasse (52) faite de fils de jute, de coton, de rayonne, de polyester ou de verre.

2. Conducteur flexible pour courant fort selon la revendication 1, caractérisé en ce qu'un treillis tissé, de la même matière que l'enveloppe (64) est placé en-dessous de celui-ci ou à son intérieur et recouvre lui-même une feuille métallique (63).

3. Conducteur flexible selon la revendication 1 ou 2, caractérisé en ce que par dessus l'enveloppe (64) du conducteur LWL, un conducteur de protection fractionnée (41) est câblé, et lui-même recouvert d'une enveloppe (42) fait d'un mélange caoutchouté.

4. Conducteur flexible selon une des revendications 1 à 3, caractérisé en ce que d'une part le diamètre du conducteur LWL (6) ou du câble conducteur (7) de protection fractionnée l'entourant est sensiblement égal au diamètre des deux autres câbles (4) de protection fractionnée, d'autre part chaque bourrage entre câbles d'énergie où ne se trouve pas un conducteur optique est rempli à concurrence de 30 % de son volume par de la filasse, tandis que chaque bourrage où se trouve un conducteur optique est rempli de la même manière à concurrence de 70 % de son volume.
